# DEMANDE DE BREVET EUROPEEN

(11) **EP 1 591 423 A1**
(43) Date de publication de la demande: **02.11.2005**
(21) Numéro de dépôt: 05300336.4
(22) Date de dépôt: 28.04.2005
(51) Int. Cl.: C02F 3/02, C02F 3/12

(54) **Unité de traitement d'effluent**

(30) Priorité: 29.04.2004 FR 0450832
(71) Demandeur: Cartier, Guy, 25000 BESANCON (FR)
(72) Inventeur: Cartier, Guy, 25000 BESANCON (FR)
(74) Mandataire: Rhein, Alain

(57) **Abrégé**

L'invention concerne une unité de traitement d'effluent sous forme d'une cuve (3) définissant un module et subdivisée en un digesteur primaire (5) dans lequel est déversé l'effluent à traiter et un digesteur secondaire (6) avec lequel communique le digesteur (5) et d'où est prélevé l'effluent après traitement.

Elle comporte des moyens (9) hydrauliques et/ou pneumatiques de brassage des boues (8) en fond de cuve (3), constituant, en outre, des moyens de remuage de surface de l'effluent dans ledit digesteur primaire (5) et ledit digesteur secondaire (6).

## Description

L'invention concerne une unité de traitement d'effluent, sous forme d'une cuve définissant un module et subdivisée en un digesteur primaire dans lequel est déversé l'effluent à traiter et un digesteur secondaire avec lequel communique le digesteur primaire et d'où est prélevé l'effluent après traitement.

L'on connaît d'ores et déjà de nombreuses unités de traitement, notamment anaérobie, d'effluents qui, pour certaines, nécessitent des infrastructures génies civiles lourdes, ainsi qu'un apport d'énergie extérieur pour le fonctionnement hydraulique des installations.

L'on comprend bien que de telles unités ne sont nullement adaptées pour le traitement d'effluents de petites collectivités, sans compter que le terrain sur lequel il convient de les mettre en oeuvre n'est pas toujours propice à des aménagements de type génie civil lourdes.

Pour répondre à ces conditions particulières et assurer le traitement d'effluents correspondant à un nombre réduit d'équivalents habitants, l'on a d'ores et déjà imaginé des unités de traitement sous forme de cuve aérienne ou enterrée, compartimentée ou non, dans la partie amont de laquelle l'on vient déverser l'effluent à traiter pour le récupérer, en fin de traitement, en partie avale.

La taille de ces cuves est déterminée en fonction du temps de séjour nécessaire à la digestion de la matière biodégradable que contient cet effluent. Intervient, évidemment, dans ce dimensionnement, le rendement de fonctionnement de l'unité de traitement et plus il est élevé, plus les cuves peuvent être petites, sans compter qu'il en résulte une moindre accumulation de boues en fond de cuve, ce qui permet d'espacer les interventions de curage.

On connaît notamment un brevet US 5 011 605 qui décrit un système à chambres subdivisées par des cloisons réglables verticalement, et pouvant être communicantes. Ces chambres comportent un dispositif d'aération par injection d'oxygène au point bas.

La présente invention a pour but de proposer des perfectionnements améliorant le rendement de ce type d'unités de traitement.

Ainsi, l'invention concerne une unité de traitement d'effluent sous forme d'une cuve définissant au moins un module et subdivisée en un digesteur primaire dans lequel est déversé l'effluent à traiter et un digesteur secondaire avec lequel communique le digesteur primaire et d'où est prélevé l'effluent après traitement, caractérisée par le fait qu'il comporte des moyens hydrauliques et/ou pneumatiques de brassage des boues en fond de cuve , lesdits moyens constituant, en outre, des moyens de remuage de surface de l'effluent dans ledit digesteur primaire et ledit digesteur secondaire

Selon une autre particularité de l'invention, l'unité de traitement étant susceptible d'être constituée d'un ou d'une pluralité de modules juxtaposés.

Tout particulièrement, une unité de traitement, composée de plusieurs modules, comporte, encore, des moyens de recirculation à contre-courant des boues. Ainsi, les boues d'un module en aval sont réinjectées dans le digesteur primaire correspondant à un module amont.

Selon une autre particularité de l'invention, les différents modules composant l'unité de traitement sont communicants, en partie inférieure, en particulier au travers de leur lit de boues.

La présente invention sera mieux comprise à la lecture de la description qui va suivre se correspondant à des exemples de réalisation illustrés dans les dessins joints en annexe :
- la figure 1 est une représentation schématisée et en coupe d'une cuve correspondant à un module de l'unité de traitement ;
- la figure 2 est une représentation schématisée en perspective de deux modules juxtaposés d'une unité de traitement ;
- la figure 3 est une représentation schématisée du fonctionnement de la valve hydropneumatique des moyens de brassage des boues ;
- la figure 4 illustre, de manière schématisée d'une part, des moyens pneumatiques de brassage des boues dans une solution aérobie et, d'autre part, les moyens de recirculation à contre-courant des boues ;
- la figure 5 est une représentation schématisée d'une unité de traitement comportant quatre modules ;
- la figure 6 représente, de manière schématisée, une unité de traitement conforme à l'invention en vue de la revalorisation de l'eau d'effluent ;
- les figures 7 et 8 illustrent les moyens de recirculation à contre-courant d'une partie de l'effluent pour garantir une implantation continue des bactéries dans les modules amont.

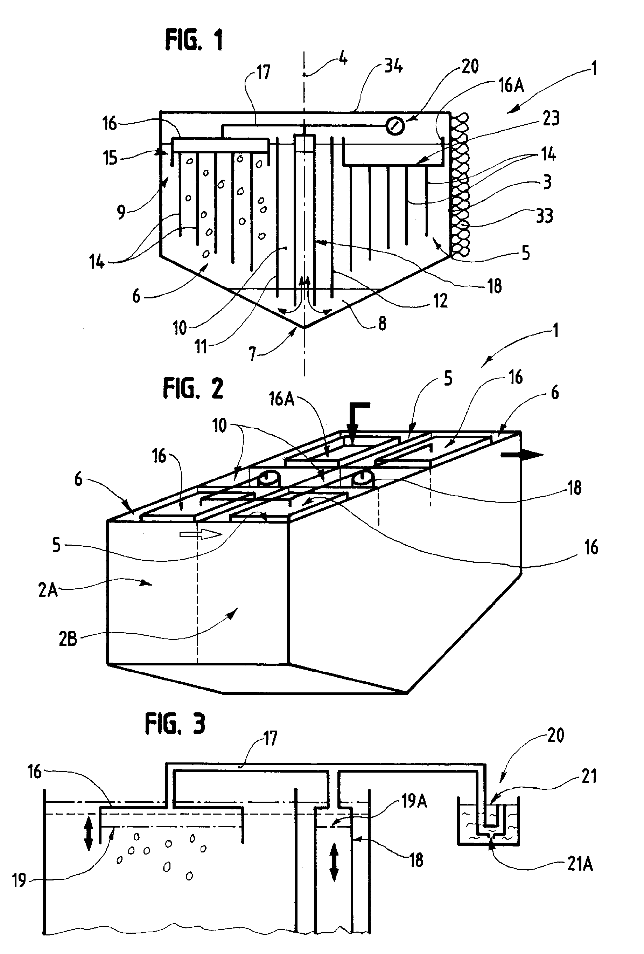

En se référant aux dessins joints en annexe, et en particulier à la figure 1, la présente invention concerne une unité de traitement d'effluent 1 constituée d'un ou plusieurs modules 2A, 2B, 2C, 2D (voir figures 2, 4, 5 et 6).

Chacun de ces modules se présente sous forme d'une cuve 3, préférentiellement symétrique par rapport à un plan médian transversal 4 et subdivisée en un digesteur primaire 5 et un digesteur secondaire 6. L'effluent à traiter arrive dans le digesteur primaire 5 pour être prélevé, après traitement, du digesteur secondaire 6.

En partie inférieure 7 de cette cuve 3, se déposent les boues 8, tenant compte que, selon la particularité de l'invention, le digesteur primaire 5 est communiquant avec le digesteur secondaire 6, au niveau de cette partie inférieure 7 de la cuve 3, soit au travers du lit de boues 8.

A ce propos, cette partie inférieure 7 de la cuve 3 est configurée en tronc de cône pour assurer une concentration des boues provenant des digesteurs 5, 6.

Selon l'invention, cette unité de traitement 1 comporte des moyens hydrauliques et/ou pneumatiques 9 du brassage des boues en fond de cuve 3.

Tout particulièrement, selon une particularité de l'invention, le digesteur primaire 5 et le digesteur secondaire 6 sont subdivisés par un puits à boue 10 défini par deux cloisons séparatives 11, 12 s'étendant sensiblement sur la toute la hauteur de la cuve 3. Ces cloisons 11, 12 préservent, toutefois, en partie inférieure 7 de cette dernière, un libre passage de communication entre le digesteur primaire 5 et le digesteur secondaire 6.

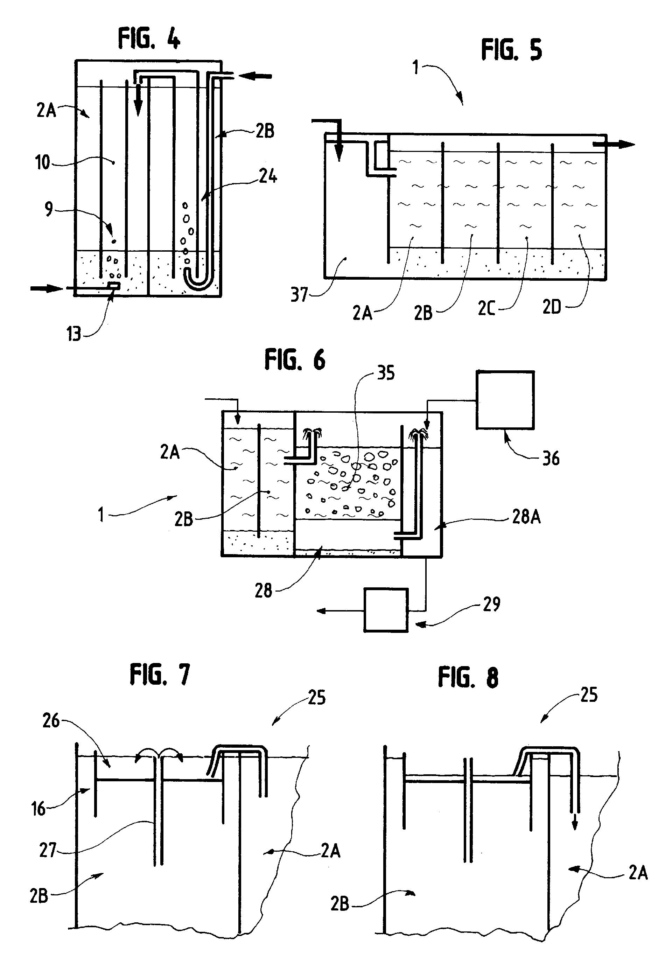

Dans le cadre d'une unité de traitement aérobie, comme visible dans la figure 4, les moyens de brassage 9 sont constitués par des moyens d'injection d'air 13 sous le puits de boues 10, ceci de manière à canaliser l'air injecté jusqu'en surface et éviter sa diffusion dans les digesteurs 5, 6. Dans ces derniers prennent position, en effet, des plaques supports de bactéries de digestion 14, sachant que de telles plaques peuvent être remplacées par un réseau tubulaire ou équivalent destiné à favoriser l'accrochage des bactéries contribuant à la digestion des boues.

Dans une solution anaérobie, correspondant plus particulièrement au mode de réalisation illustré dans les figures 1 à 3, les moyens de brassage hydrau-pneumatiques 9 sont constitués par des moyens 15 de récupération des gaz de digestion en surface d'un digesteur secondaire 6 et/ou primaire 5, moyens 15 empruntant la forme d'une cloche 16 surnageant au-dessus du digesteur 6 et sous laquelle vient à s'accumuler ce gaz de digestion. Cette cloche 16 est en communication, au moyen d'une canalisation 17 appropriée, avec un piston hydraulique 18 plongeant dans le puits de boues 10 jusque dans le lit de boues 8.

Ainsi, sous l'effet d'une augmentation de la pression de gaz sous la cloche 16, il en résulte un équilibre de pression dans le piston hydraulique 18 de sorte que le niveau d'eau 19 dans ce dernier vient tout d'abord à baisser. Dans la figure 3 il est illustré, au travers des lignes discontinues et mixtes, cette variation de niveau sous la cloche 16, d'une part, et dans le piston hydraulique 18, d'autre part.

Par ailleurs, des moyens 20 sont conçus pour, à la manière d'un clapet, relâcher la pression sous la cloche 16, au-delà d'une valeur déterminée, ceci en libérant le gaz qui s'y est accumulé. En raison de la canalisation 17, il en résulte simultanément une chute de la pression dans le piston hydraulique 18 et une remontée du niveau d'eau 19A dans ce dernier. A ce propos, cette remontée d'eau ne peut se faire que par aspiration au travers du lit de boues 8, ce qui a pour conséquence de mettre celui-ci en mouvement et de le brasser.

De manière avantageuse, les moyens 20 de gestion de la pression du gaz de digestion sous la cloche 16 se présente sous forme d'une valve hydraulique 21 comme illustré dans la figure 3. Celle-ci comporte une ouverture 21Ade remise à zéro de la pression après dégazage.

De manière tout particulièrement avantageuse encore, les moyens de brassage 9 constituent des moyens 22 de remuage de surface de l'effluent contenu dans les digesteurs 5, 6. En effet, la variation du niveau d'effluent sous la cloche 16 et dans le piston 18, entraîne immanquablement des changements de ce niveau de l'effluent dans les différents digesteurs 5, 6. Les éléments en présence dans ces derniers: cloche 16, plaque support 14, bac de dégrillage, notamment dans le digesteur primaire 5, provoquent naturellement le remuage de l'effluent en surface.

Cependant et selon un mode de réalisation avantageux, la cloche 16 est montée flottante au-dessus d'un digesteur 6, de sorte que, sous l'effet des variations de pressions du gaz de digestion accumulé sous cette cloche 16, elle est soumise à un déplacement périodique de montée et descente, améliorant l'opération de remuage et ayant pour conséquence de casser d'éventuelles croûtes formées par les éléments surnageant dans ce type d'unité de traitement.

De manière tout particulièrement avantageuse, les plaques supports 14 de bactérie de digestion peuvent être fixées sous la cloche 16 qui, étant alors elles même soumises à des déplacements périodiques, sont systématiquement lavées des boues de digestion qui s'y déposent.

Comme visible dans la figure 5, dans le cas d'une unité de traitement composée de plusieurs modules 2A, 2B, 2C, 2D, ceux-ci peuvent être communicants en partie inférieure 7 de cuve 3, soit au travers de leur lit de boues 8.

Cela permet, en particulier, de récupérer ces boues au niveau de l'un ou l'autre des modules d'extrémité 2D en vue de leur revalorisation, par exemple par compostage.

Selon l'invention, encore, une telle unité de traitement 1 à plusieurs modules 2A, 2B, 2C, 2D, peut être pourvue de moyens 24 de recirculation des boues à contre-courant. Cela consiste à prélever en continu ou de manière périodique des boues 8 d'un module aval pour les réinjecter dans un module amont.

Il a été illustré dans la figure 4, des moyens 24 de recirculation des boues sous forme d'un aspirateur à effet venturi.

Bien évidemment, cette solution est plus particulièrement adaptée dans le cadre d'un traitement aérobie. En effet, en cas de digestion en anaérobiose, une telle recirculation par aspiration venturi ne peut intervenir qu'en faisant appel à un gaz dépourvu d'oxygène, en particulier en utilisant le gaz de digestion.

Une telle unité de traitement à plusieurs modules 2A, 2B, 2C, 2D peut également être pourvue de moyens 25 d'ensemencement des modules amonts 2A, 2B, 2C en bactérie de digestion provenant de l'un quelconque des modules aval 2B, 2C, 2D.

Tout particulièrement et comme visible dans les figures 7 et 8, au-dessus d'une cloche 16 peut être ménagé un réservoir de prélèvement 26 qui, au travers d'une canule 27 plongeant dans le digesteur 6 et selon le principe des vases communicants, vient naturellement se remplir lorsque la cloche 16 est en position basse, c'est à dire après dégazage.

Puis, par gestion du niveau d'effluent dans un module amont, par rapport à la position haute empruntée par cette cloche 16 dans un module aval sous l'impulsion des gaz de digestion accumulés, cette quantité d'effluent dans ledit réservoir de prélèvement 26 peut être aspirée pour être renvoyée dans ledit module amont.

A noter que le premier module 2A peut-être alimenté en effluent à traiter au travers d'un réservoir tampon de prétraitement 37, permettant une alimentation régulée de l'unité 1 et évitant un fonctionnement par à-coup. Là encore, grâce à des moyens d'ensemencement et/ou de recirculation des boues ce réservoir tampon de prétraitement 37 peut être ensemencé au travers d'un module en aval en bactérie de digestion favorisant la fonction de prétraitement.

Dans la figure 6 il est illustré une unité de traitement, conforme à l'invention, constituée de deux modules 2A, 2B en aval desquels est associé un réservoir de stockage d'eau traitée. Ainsi, cette eau traitée est prélevée en phase aqueuse du dernier module, ici 2B, sous d'éventuels surnageant. Cette eau prélevée est déversée au-dessus d'un lit d'agrégat 35, support de bactéries. Dans un compartiment séparé 28A, l'eau prélevée sous le lit d'agrégat 35 peut être additionnée de sel par des moyens appropriés diffuseur de sel 36. L'eau peut ensuite être décontaminée par électrolyseur de sel 29. Il est alors possible de revaloriser cette eau dans un réseau d'alimentation d'une habitation.

De même, pour garantir un traitement d'une qualité constante tout au long de l'année, l'unité de traitement 1 peut comporter des moyens réchauffeurs de l'effluent à traiter. En particulier, de tels moyens peuvent se présenter sous forme d'un panneau solaire muni d'un serpentin dans lequel l'on peut faire circuler, soit directement l'effluent, soit l'eau d'un circuit de chauffage secondaire.

De telles unités de traitement 1 peuvent être enterrées. Un calorifugeage extérieur 33 assure, alors, le maintien en température de la ou des cuves 3 du ou des modules.

Evidemment, si cette unité de traitement 1 est prévue pour fonctionner en anaérobiose, une cuve 3 est refermée par un couvercle 34 étanche qui, là encore, peut procurer une isolation thermique.

## Revendications

1. Unité de traitement d'effluent sous forme d'une cuve (3) définissant au moins un module (2A, 2B, 2C, 2D) et subdivisée en un digesteur primaire (5) dans lequel est déversé l'effluent à traiter et un digesteur secondaire (6) avec lequel communique le digesteur primaire (5) et d'où est prélevé l'effluent après traitement, **caractérisée par le fait qu'**il comporte des moyens (9) hydrauliques et/ou pneumatiques de brassage des boues (8) en fond de cuve (3), lesdits moyens (9) constituant, en outre, des moyens de remuage de surface de l'effluent dans ledit digesteur primaire (5) et ledit digesteur secondaire (6).

2. Unité de traitement selon la revendication 1, **caractérisée par le fait qu'**un module (2A, 2B, 2C, 2D) est prévu apte à être juxtaposé à un module similaire (2A, 2B, 2C, 2D), de sorte que l'effluent prélevé en sortie du digesteur secondaire (6) d'un module amont (2A, 2B, 2C) est à même d'être déversé dans le digesteur primaire (5) d'un module immédiatement juxtaposé en aval (2B, 2C, 2D).

3. Unité de traitement selon la revendication 2, **caractérisée par le fait que** les modules (2A, 2B, 2C) qui la composent sont communicants, en partie inférieure (7), au travers de leur lit de boues (8).

4. Unité de traitement selon l'une quelconque des revendications précédentes, **caractérisée par le fait que** le digesteur primaire (5) et le digesteur secondaire (6) d'un module (2A, 2B, 2C, 2D) sont subdivisés par un puits à boues (10) s'étendant sensiblement sur toute la hauteur de la cuve (3), tout en préservant, en partie inférieure (7) de cette dernière, un libre passage de communication entre ledit digesteur primaire (5) et ledit digesteur secondaire (6).

5. Unité de traitement selon la revendication 4, **caractérisée par le fait que** lesdits moyens de brassage (9) sont constitués par des moyens d'injection d'air (13) sous le puits de boues (10) .

6. Unité de traitement selon la revendication 4, **caractérisée par le fait que** lesdits moyens de brassage (9) sont constitués par des moyens (15) de récupération des gaz de digestion, en surface d'un digesteur secondaire (6) ou primaire (5), lesdits moyens (15) étant en communication avec un piston hydraulique (18) plongeant dans ledit puits de boues (10) jusque dans ledit lit de boues (8) pour, par variation de pression, engendrer une variation de niveau (19A) dans ledit puits de boues (10) en vue d'assurer le brassage des boues.

7. Unité de traitement selon la revendication 6, **caractérisée par le fait que** lesdits moyens (15) sont constitués par au moins une cloche (16) surnageant au-dessus d'un digesteur (5, 6) et sous laquelle est à même de s'accumuler le gaz de digestion, cette cloche (16) étant en communication, au moyen d'une canalisation (17), avec ledit piston hydraulique (18), des moyens (20) étant conçus pour, à la manière d'un clapet, relâcher la pression sous ladite cloche (16) au-delà d'une valeur déterminée pour entraîner une variation du niveau d'eau (19A) dans ledit piston hydraulique (18).

8. Unité de traitement selon la revendication 7, **caractérisée par le fait que** des moyens (20) de gestion de la pression de gaz de digestion sous ladite cloche (16) se présentent sous la forme d'une valve hydraulique (21).

9. Unité de traitement selon les revendications 1 et 7, **caractérisée par le fait que** lesdits moyens (22) de remuage de surface de l'effluent sont constitués par une cloche (16) montée flottante au-dessus d'un digesteur (5, 6) et cassant les croûtes éventuelles .

10. Unité de traitement selon la revendication 9, **caractérisée par le fait que** sous ladite cloche (16) montée flottante au-dessus d'un digesteur (5, 6) sont fixées des plaques-support (14) de bactéries et de digestion.

11. Unité de traitement selon l'une quelconque des revendications précédentes, **caractérisée par le fait qu'**elle comporte des moyens (24) de recirculation des boues définis aptes à prélever en continu ou de manière périodique des boues (8) d'un module aval (2B, 2C, 2D) pour les réinjecter dans un module amont (2A, 2B, 2C).

12. Unité de traitement selon l'une quelconque des revendications précédentes, **caractérisée par le fait qu'**elle comporte des moyens (25) d'ensemencement des modules amont (2A, 2B, 2C) en bactéries de digestion provenant de l'un quelconque des modules aval (2B, 2C, 2D).

13. Unité de traitement selon l'une quelconque des revendications précédentes, **caractérisée par le fait qu'**elle comporte un réservoir de stockage d'eau traitée (28, 28A), ainsi que des moyens (36) diffuseurs de sel dans ce réservoir (28A) et un électrolyseur de sel (29) en vue de la revalorisation de l'eau.

14. Unité de traitement selon l'une quelconque des revendications précédentes, **caractérisée par le fait que** le premier module (2A) est alimenté en effluent à traiter au travers d'un réservoir tampon de prétraitement (37), préférentiellement ensemencé en bactéries de digestion d'un module en aval (2A, 2B, 2C, 2D).
